# EUROPÄISCHE PATENTANMELDUNG

(11) **EP 1 150 106 A1**
(43) Veröffentlichungstag der Anmeldung: **31.10.2001**
(21) Anmeldenummer: 00108914.3
(22) Anmeldetag: 27.04.2000
(51) Int. Cl.: G01J 3/26, G01N 21/31

(54) **Verfahren und Vorrichtung zur präzisen, quantitativen Stoffanalyse in Flüssigkeiten, Gasen und Feststoffen**

(71) Anmelder: Krieg, Gunther, Prof.Dr.Ing., D-76227 Karlsruhe (DE)
(72) Erfinder: Koukolitschek, Karl, Dipl.-Ing., 76189 Karlsruhe (DE); Krieg, Gunther, Prof. Dr. Ing., 76227 Karlsruhe (DE); Maier, Wilfried, 75056 Sulzfeld (DE)
(74) Vertreter: Lempert, Jost, Dipl.-Phys. Dr. rer.nat.

(57) **Zusammenfassung**

Die Erfindung betrifft ein Verfahren sowie Vorrichtungen zur Messung der Absorptionsspektren von gasförmigen, flüssigen und festen Substanzen bzw. von Stoffgemischen, dadurch gekennzeichnet, daß der jeweilige Spektralbereich überstrichen wird, indem ein einziges Interferenzfilter unter verschiedenen Einfallswinkeln von mindestens einer breitbandigen optischen Strahlungsquelle durchstrahlt wird.

## Beschreibung

Die Erfindung betrifft ein Verfahren und eine Vorrichtung zur präzisen Stofferkennung und präzisen Konzentrationsbestimmung der in Stoffgemischen und/ oder Verbindungen enthaltenen Stoffgruppen durch Anwendung der optischen Spektralanalyse im ultravioletten-, sichtbaren-, nahen-infraroten-, infraroten- und fernen-infraroten-Spektralbereich.

Die derzeit verfügbaren spektroskopischen Systeme zur Stoffanalyse haben den großen Nachteil, daß zur Erfassung der gesamten oder wichtiger, charakteristischer Teilausschnitte der Absorptionsspektren sehr aufwendige Systeme erforderlich sind. In diese Systemgruppe fallen vor allem Gitterspektrometer, Fast-Fourier-Transform-Spektrometer, Sensor-Array-Spektrometer sowie Prismen-Spektrometer. Der große Nachteil dieser Spektrometergruppe besteht vor allem in den für viele Anwendungen zu hohen Anschaffungskosten. Ferner sind derartige Systeme nur bedingt für den Einsatz in technischen Produktionsprozessen geeignet, da aufwendige und komplexe mechanische Bewegungsabläufe erforderlich sind, deren mechanische Instabilitäten mit den daraus resultierenden unzureichenden Reproduzierbarkeiten dazu führen, daß die im rauhen Industriebetrieb gestellten Anforderungen und Spezifikationen prinzipbedingt im Langzeitbetrieb nur bei personalintensiver Wartung erreicht werden können.

Wesentlich einfachere Systeme, sogenannte Filter-Photometer, sind ebenfalls auf dem Markt und dienen der Bestimmung von Stoffen bzw. Stoffkonzentrationen, indem mehrere Interferenzfilter nacheinander in den Strahlengang einer breitbandigen Lichtquelle geschwenkt werden. Da pro Stoff jedoch mindestens ein Interferenzfilter notwendig ist, sind bei der Analyse von Multikomponentengemischen zahlreiche Schmalbandfilter erforderlich, deren Gesamtkosten in vielen Anwendungsfällen nicht tragbar sind.

Ziel der vorliegenden Erfindung sind daher ein Verfahren und Vorrichtungen, die einerseits ermöglichen nicht nur einzelne Punkte, sondern das gesamte Spektrum eines Stoffgemisches lückenlos zu ermitteln und andererseits erlauben, Spektralapparate bei um Faktoren niedrigeren Produktionskosten im Vergleich zu den o.g. Systemen herzustellen.

Dieses Ziel wird mittels dieser Erfindung dadurch erreicht, daß unter Einsatz nur eines einzigen Schmalband-Interferenzfilters, das unter verschiedenen Einfallswinkeln von einer breitbandigen Lichtquelle beleuchtet und das jeweilige Spektrum punktweise abgetastet wird.

Gemäß dem Stand der Technik sind Erfindungen, z. B. DE 36 15 260, DE 36 15 259, EP 92102499.8-2204, bekannt, die unter Einsatz von Meß- und Referenzstrahlen, deren Wellenlängen mit mehreren optischen Interferenzfiltern selektiert werden, zur Stoffanalyse durch Absorption herangezogen werden. Ferner werden zur Detektion der Strahlen Halbleitersensoren, z. B. Meß- und Referenzsensoren beim Vierstrahl-zwei-Wellenlängen-Verfahren, eingesetzt.

Die vorliegende Erfindung ist in den folgenden Figuren detailliert beschrieben. Dabei zeigen:
- Fig. 1:: den prinzipiellen Aufbau des Meßverfahrens;

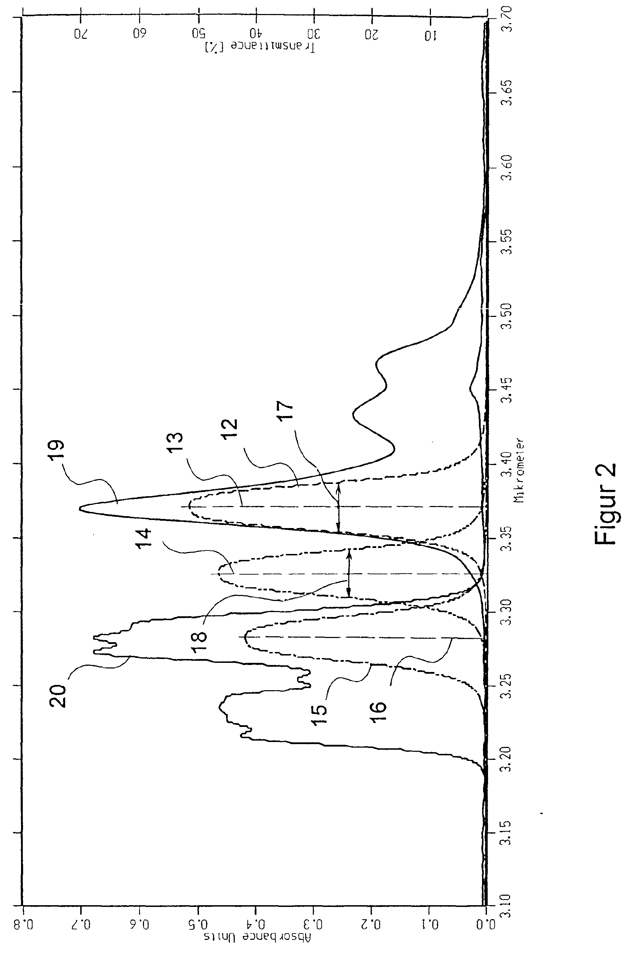

- Fig. 2:: die Spektren von zwei beispielhaft ausgewählten Stoffen in der Gasphase sowie die Verschiebung der Interferenzfilter-Transmissionskurve in Abhängigkeit vom Einfallswinkel der Lichtquelle;
- Fig. 3:: die Spektren von zwei beispielhaft ausgewählten Stoffen in der Flüssigphase, die im Offsetdruck Verwendung finden;
- Fig. 4:: die sukzessive Verschiebung der Transmissionskurve ein und desselben Schmalbandfilters in Abhängigkeit vom Einfallswinkel der optischen Strahlung und
- Fig. 5:: eine spezielle Ausbildung des Systems unter Vermeidung von mechanisch bewegten Teilen.

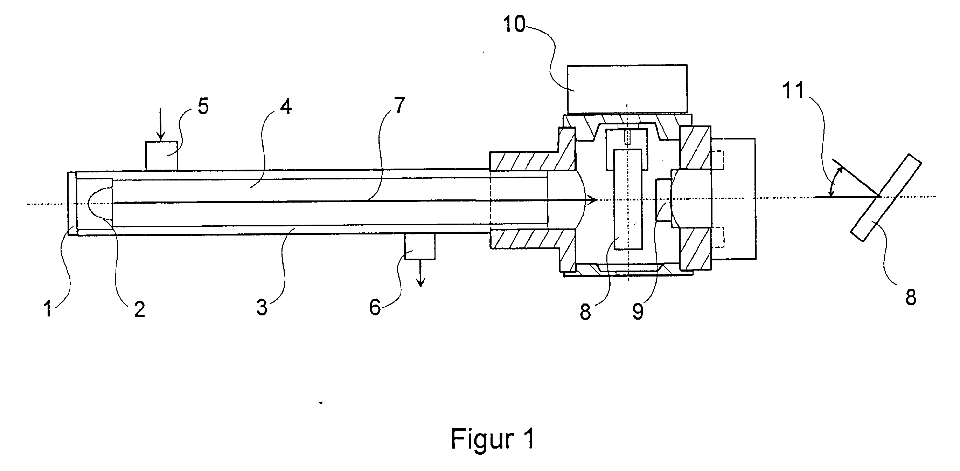

Das erfindungsgemäße System gemäß Figur 1 besteht aus einer optischen Strahlungsquelle (1), welche ultraviolette, sichtbare und/oder infrarote Strahlung breitbandig erzeugt und deren Licht über einen Parabolspiegel (2) parallelisiert wird. Die Strahlungsquelle (1) kann aus einer Gasentladung, z. B. einer Xeron-Lampe, oder einem Planck'schen Strahler, z. B. einem glühendem Draht, bestehen. Die Strahlung durchläuft eine Meßzelle (3), die vom zu untersuchenden Stoffgemisch (4) über zwei Anschlüsse (5,6) in gasförmiger oder flüssiger Form durchströmt wird. Die optische Strahlung (7) gelangt anschließend durch ein Schmalband-Interferenzfilter (8) auf einen Strahlungssensor (9). Das Schmalband-Interferenzfilter (8) kann über einen Schrittmotor (10) in beliebige Positionen gebracht werden, so daß der Einfallswinkel (11) variiert werden kann.

Gemäß Figur (2) kann daher der Transmissionsbereich (12) des Interferenzfilters (8) von der Zentralwellenlänge (13), entsprechend z. B. 3,375 µm bei einem Einfallswinkel (11) von 90 Grad kontinuierlich zu kleineren Wellenlängen, z. B. bis zur Zentralwellenlänge (14) entsprechend 3,325 µm bei einem Einfallswinkel (11) von 15 Grad verschoben werden. Durch weitere Verkippung des Interferenzfilters (8) gemäß einem Einfallswinkel (11) von 40 Grad kann die Transmissionskurve (15) mit der Zentralwellenlänge (16) von 3,275 um realisiert werden. Die typischen Halbwertsbreiten (17,18) der Schmalband-Interferenzfilter liegen im Bereich von 0,5 bis 2% der jeweiligen Zentralwellenlänge (13,14,16), so daß eine Abtastung der verschiedenen Stoffe/Stoffgemische (19, 20) mit der erforderlichen hohen spektralen Auflösung gewährleistet ist. Das Extinktions-Spektrum (19) entspricht der Absorption von gasförmigen Isooctan, das Extinktions-Spektrum (20) ist dem Stoff Benzol zugeordnet.

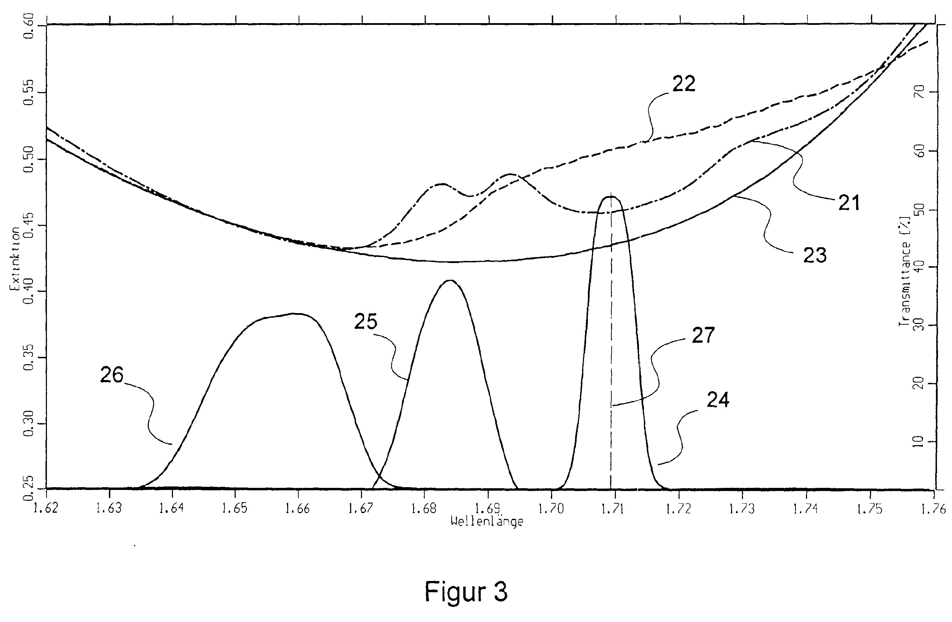

Für die Messung von flüssigen Stoffen bzw. Stoffgemischen zeigt Figur 3 das Spektrum von Isopropanol (21) im nahen Infrarotbereich bei Wellenlängen in der Nähe von 1,7 µm. Die Messung dieses Spektrums mit dem Verfahren gemäß Figur 1 erlaubt z. B. eine kontinuierliche Bestimmung der Ist-Konzentration von flüssigem Isopropanol bzw. von Isopropanol-Ethanol-Gemischen im sogenannten Feuchtwasser von Offset-Druckmaschinen und darüber hinaus eine gezielte Dosierung/Regelung der Isopropanol-Konzentration auf einen vorgegebenen Sollwert.

Im Rahmen der Bemühungen, das umweltschädliche Isopropanol (21) im Offsetdruck durch ungefährliche Ersatzstoffe (22) zu ersetzen, kann alternativ durch Abtastung des Ersatzstoffspektrums (22) mit der in Figur 1 dargestellten Methode die Konzentrationsbestimmung und Konzentrationsregelung von Ersatzstoffen (22) im Gemisch mit Wasser (23) erfolgen. Diese Ersatzstoffe bestehen im wesentlichen aus einem Multikomponentengemisch verschiedenster chemischer Kohlenwasserstoff-Verbindungen und können mit dem Verfahren gemäß Figur 1 durch punktweise Ermittlung der "Fingerprint-Struktur" (22) On-Line identifiziert und quantitativ bestimmt werden. Zu diesem Zweck wird das Schmalband-Interferenzfilter (24) mit einer Zentralwellenlänge (27) von 1,710 µm bei einem Einfallswinkel der breitbandigen optischen Strahlung von 0 Grad erfindungsgemäß sukzessive verschwenkt, so daß gemäß den Transmissionskurven (25,26) sowie dazwischenliegender Positionen, das Spektrum des Ersatzstoffes (22) in Wasser (23) punktweise abgetastet wird. Neben der Identifikation des Stoffes aus der Kurvenform ist eine präzise Konzentrationsbestimmung des Ersatzstoffes aus der gleichzeitig gemessenen Lichtschwächung, d. h. der Transmission I/Io, gegeben durch das Verhältnis aus der Wellenlänge der einfallenden Strahlungsintensität Io und der vom Ersatzstoff geschwächten Strahlungsintensität I oder durch die optische Extinktion E, die sich gemäß E = In (Io/I) berechnet, möglich.

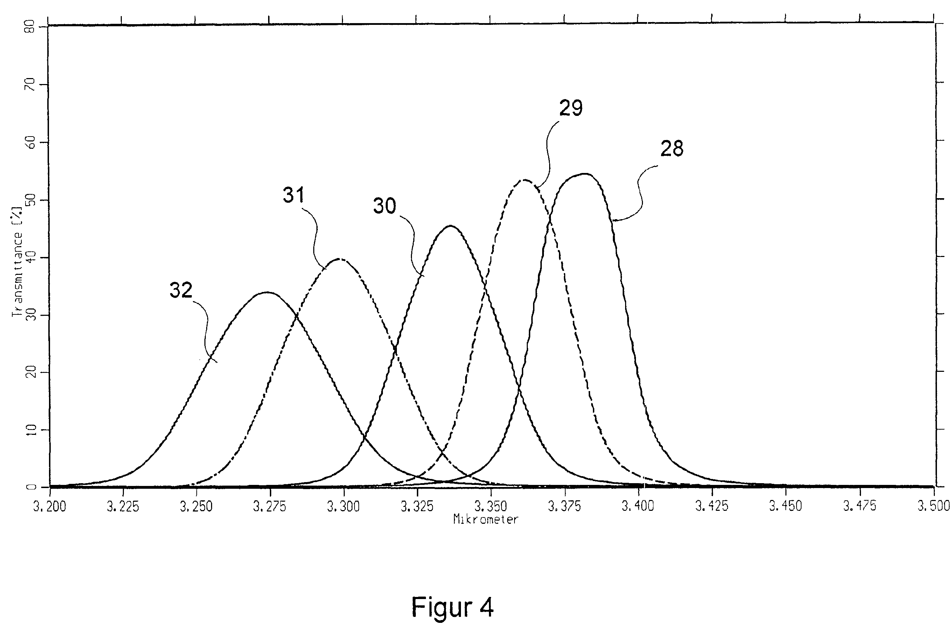

Die sukzessive Verschiebung der Transmissionskurve (28) eines bestimmten Interferenzfilters (8) bei Änderung des Einfallswinkels (11) von 0 Grad auf 12 Grad (29) bzw. auf 24 Grad (30) bzw. auf 36 Grad (31) bzw. auf 42 Grad (32) gemäß Figur 4 zeigt nochmals die Möglichkeit zur quasi kontinuierlichen Durchstimmung eines Wellenlängenbereiches zwischen 3,375 µm und 3,270 µm zur Realisierung des erfindungsgemäßen Verfahrens.

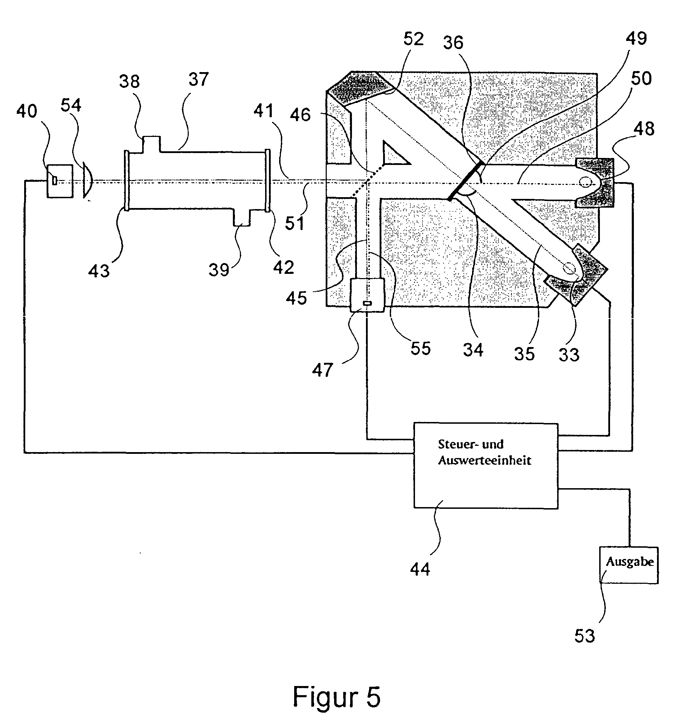

Ein weiteres Verfahren sowie eine Vorrichtung unter praktischer Nutzung der vorliegenden Erfindung zeigt Figur 5. Das Licht (35) einer ersten Strahlungsquelle (33) durchläuft ein unter dem Winkel (34) gekipptes Interferenzfilter (36) und gelangt über einen Reflektor (52) als sogenanntes Meßlicht mit der gewünschten Zentralwellenlänge gemäß Figur 4 durch eine Meßzelle (37), welche mit dem zu untersuchenden flüssigen oder gasförmigen Stoffgemisch über die Anschlußstutzen (38, 39)durchströmt wird, bevor es nach Durchlaufen einer Fokussierungsoptik (54) auf den Meßsensor (40) trifft. Der Winkel (34) wird dabei so gewählt, daß der Teilstrahl (41) die gewünschte Absorptionswellenlänge aufweist. Um Verschmutzungen der optischen Fenster (42,43), elektronisches Driften der Steuer- und Auswerteeinheit (44) zu eliminieren, wird ein zweiter Teilstrahl (45) über einen optischen Strahlteiler (46) einem Referenzsensor (47) zugeleitet. Das Licht (50) einer zweiten Strahlungsquelle (48) gelangt unter dem Winkel (49) durch das Interferenzfilter (36) und wird als Referenzlicht über einen Reflektor (52) ebenfalls auf den Referenzsensor (47) sowie über den Strahlteiler (46) auf den Meßsensor (40) gelenkt. Die Lichtquellen (33) und (48) werden entweder alternierend ein- bzw. ausgeschaltet oder auch gleichzeitig bei verschiedenen Taktfrequenzen betrieben. Durch diese Maßnahme werden die Wellenlängen der Strahlungsquellen (33,48) jeweils einer bestimmten Taktfrequenz zugeordnet und können so mit dem Lock-in-Prinzip (wie in Pat. EP 92102499.8-2204 bereits beschrieben) separiert werden. Die Auswertung der Intensitäten der vier Teilstrahlen (41,51,45,55) mit zwei verschiedenen Wellenlängen erfolgt gemäß dem oben beschriebenen Stand der Technik. Das Meßergebnis wird über geeignete Schnittstellen an eine Ausgabe (53) weitergeleitet.

## Patentansprüche

1. Verfahren zur Messung von optischen Spektren im Spektralbereich von 200 nm bis 20 µm unter Einsatz von Interferenzfiltern, **dadurch gekennzeichnet, daß** ein einziges Interferenzfilter unter mindestens zwei verschiedenen Einfallswinkeln von mindestens einer breitbandigen optischen Strahlungsquelle durchstrahlt wird.

2. Verfahren nach Anspruch 1, **dadurch gekennzeichnet, daß** die verschiedenen Einfallswinkel zeitlich nacheinander durch mechanisches Verkippen des Interferenzfilters realisiert werden.

3. Verfahren nach Anspruch 1, **dadurch gekennzeichnet, daß** die verschiedenen Einfallswinkel simultan durch mehrere unter verschiedenen Richtungen auf das Interferenzfilter auftreffende optische Strahlen realisiert werden.

4. Verfahren nach Anspruch 3, **dadurch gekennzeichnet, daß** die optischen Strahlen mit unterschiedlichen Frequenzen getaktet werden, und daß eine frequenzselektive Auswertung jedes Strahls an den Strahlungssensoren erfolgt.

5. Verfahren nach Anspruch 1 und 2, **dadurch gekennzeichnet, daß** die mechanische Verkippung des Interferenzfilters durch einen Schrittmotor erfolgt.

6. Vorrichtung zur Messung von optischen Spektren im Spektralbereich von 200 nm bis 20 µm unter Einsatz von Interferenzfiltern (8,36), **dadurch gekennzeichnet, daß** ein einziges Interferenzfilter (8,36) unter mindestens zwei verschiedenen Einfallswinkeln (11,34,49) von mindestens einer breitbandigen optischen Strahlungsquelle (1,33,48) durchstrahlt wird.

7. Vorrichtung zur Messung von optischen Spektren nach Anspruch 6, **dadurch gekennzeichnet, daß** die verschiedenen Einfallswinkel zeitlich nacheinander durch mechanisches Verkippen des Interferenzfilters (8) unter verschiedenen Winkeln (11) eingestellt werden.

8. Vorrichtung nach Anspruch 6, **dadurch gekennzeichnet, daß** die verschiedenen Einfallswinkel (34,49) simultan durch mehrere unter verschiedenen Richtungen (35,50) auf das Interferenzfilter (36) auftreffende optische Strahlen (35,50) realisiert werden.

9. Vorrichtung nach Anspruch 8, **dadurch gekennzeichnet, daß** die optischen Strahlen (35,50) mit unterschiedlichen Frequenzen getastet werden, und daß eine frequenzselektive Auswertung (44) jedes Strahls (35,50) mittels einer Steuer- und Auswerteeinheit (4), die den Strahlungssensoren (40,42) nachgeschaltet ist, erfolgt.

10. Vorrichtung nach Anspruch 6 und 7, **dadurch gekennzeichnet, daß** die mechanische Verkippung des Interferenzfilters (8) unter verschiedenen Winkeln (11) durch einen Schrittmotor (10) erfolgt, dessen Schritte so eng gewählt sind, daß eine Ermittlung des jeweiligen Spektrums mit der nötigen Auflösung erfolgt.
